# EUROPEAN PATENT APPLICATION

(11) **EP 2 633 788 A1**
(43) Date of publication of application: **04.09.2013**
(21) Application number: 12425043.2
(22) Date of filing: 28.02.2012
(51) Int. Cl.: A47J 31/44

(54) **Automatic device for heating and foaming milk**

(71) Applicant: Gruppo Cimbali S.p.A., 20082 Binasco (MI) (IT)
(72) Inventor: Barra, Massimo, 20082 Binasco (MI) (IT); Carenini, Stefano, 20082 Binasco (MI) (IT); Granata, Michele, 20082 Binasco (MI) (IT)
(74) Representative: Sgobba, Marco

(57) **Abstract**

An automatic device for heating and foaming milk comprising a steam-generating boiler (2); a delivery member (3) connected to the boiler (2) through which steam, pressurised air or a mixture thereof can pass, provided with an open extremity (4) which can be immersed in a container (101); a temperature-sensitive component (6) intended to detect the temperature of the milk in the container (101); a control unit (7) connected to the temperature-sensitive component (6) intended to activate programs providing operating instructions for the delivery of a mixture of air and steam from the delivery member (3). The device comprises a selector (13) having a moving part (13a) and a fixed part (13b) connected to the control unit (7); the moving part (13a) being capable of being switched between operating positions, each of which is associated with a program. An activation control (14) is associated with the control unit (7) to activate the selected program.

## Description

This invention relates to an automatic device for heating and foaming milk.

Automatic devices for heating and foaming milk are used in bar machines to prepare hot beverages such as for example coffees, cappuccinos, lattes, chocolate and the like.

Increasingly improved bar machines of the automatic type for the preparation of hot beverages capable of delivering beverages of good quality in a completely automatic way have been developed during the last ten years.

In particular, devices capable of automating some necessary operations in the preparation of beverages, such as for example heating and foaming milk, have been developed.

In fact the operations of heating and foaming milk require considerable ability on the part of the operator (the barman) in that they require a jet of steam to be injected into a container, for example a jug containing cold milk through a nozzle, known in the technical jargon by the term "lance", located at the end of a steam conduit, generally provided with a stop valve to control the flow of steam. The operator stops delivering the flow of steam once the desired temperature has been reached and after a sufficient quantity of air has been incorporated into the milk to form a soft compact foam. The operations described above are usually performed by the barman by acting on a handle which rotates or moves in a straight line and controls opening of the stop valve to control the flow of steam and its delivery as the milk is being foamed.

These operations are rather complex and difficult to calibrate in that specific ability is required to obtain the desired amount of foaming at the desired temperature, and this is usually only acquired through experience gained over time.

For this reason automatic devices which provide complete control of the heating temperature and the quantity of foam produced, relieving the operator from this task and also enabling an inexpert operator to prepare a good beverage, have been developed.

On example of these automatic devices is described in document EP 1501398 B1 in the name of the Applicant.

In this automatic device, each pushbutton in a set of pushbuttons is associated with a series of operations which are performed automatically. Thus, depending upon the temperature and/or desired foaming of the milk, pressing a button allows the operator to obtain the desired result without the need for any special abilities.

However, specifically in those markets in which bar machines have been present for a long time, such as for example Italy and Mediterranean countries, there is a strong propensity to use "conventional" machines, that is to say machines without the afore automatic devices for heating and foaming milk.

This propensity arises from the barman's desire to show off his manual skill and professional ability in preparing the beverage (and particularly in foaming of the milk) to consumers in an attempt to distinguish himself from the competition.

In fact, in countries with a long tradition for the preparation of hot beverages such as cappuccinos, coffees, chocolate and the like, consumers are often fascinated by the barman's manual ability in working the handles or levers operating heating lances and foaming milk, and do not on the contrary appreciate automatic systems in which merely pressing a button is sufficient to foam the milk (even though these systems offer results which are wholly similar to those obtained by the best and most expert barmen).

In this context the technical task underlying this invention is to provide an automatic device for heating and foaming milk which overcomes the disadvantages in the abovementioned known art.

In particular one object of this invention is to provide an automatic device for heating and foaming milk that is capable of providing the consumer with the impression that the barman's professional ability has an important part to play in foaming the milk.

The technical task specified and the object specified are substantially achieved through an automatic device for heating and foaming milk comprising the technical characteristics set out in one or more of the appended claims.

Further characteristics and advantages of this invention will be more apparent from the indicative and therefore non-restrictive description of a preferred but not exclusive embodiment of an automatic device for heating and foaming milk as illustrated in the appended drawings in which:
- Figure 1 is a diagrammatical view of an automatic device for heating and foaming milk which can be associated with a bar machine;
- Figure 2 is a perspective view of a detail of the device in Figure 1;
- Figure 3 is a view in cross-section of the detail in Figure 2 along the plane III-III;
- Figure 4 is a perspective view of the detail of the device in Figure 2 in a second embodiment; and
- Figure 5 is an exploded view with some parts removed to better reveal other parts of the detail in Figure 4. With reference to the abovementioned figures, 1 generically indicates an automatic device for heating and foaming milk according to this invention which can be associated with a machine 100 for the preparation of beverages such as coffees, cappuccinos, lattes, chocolate and the like.

Purely for the purpose of simplifying description of this invention, in the remainder of this description reference will be made to milk in a non-specific way, this being intended to refer also to any beverage which can be heated and foamed.

In the embodiment illustrated in the figures, device 1 comprises a steam-generating boiler 2 and a delivery member 3 provided with an open extremity 4 which can be immersed into a container 101 containing milk.

A mixture of pressurised air and steam, in which the ratio between steam and pressurised air can be varied continuously between 0 (pressurised air only) and 1 (steam only), can pass through delivery member 3.

Delivery member 3 is preferably a duct which can be orientated at will so as to ease its insertion and that of open extremity 4 into container 101. Delivery member 3 is otherwise known in the industry by the name of a lance.

In the embodiment of the invention pressurised air is generated by a pressurised air source 5, that is a source which is capable of delivering air at a pressure greater than atmospheric pressure, connected to delivery member 3. Pressurised air and steam are therefore fed separately to delivery member 3 and mixed within it.

Device 1 is provided with a component 6 which is temperature-sensitive and designed to detect the temperature of the milk in container 101 in which the open extremity 4 of delivery member 3 is inserted. Temperature-sensitive component 6 is located on delivery member 3 close to open extremity 4. Temperature-sensitive component 6 is for example a thermocouple, a thermal resistance and the like.

A control unit 7 is attached to temperature-sensitive component 6 to receive signals representative of the temperature of the milk from the latter intended to activate a plurality of programs.

In each program control unit 7 associates a set of operations which have to be performed and bring about controlled activation of pressurised air source 5 and controlled delivery of steam to delivery member 3. The operations which have to be performed depend upon the temperature and/or desired foaming of the milk.

In this way it is possible to obtain multiple combinations of temperature and desired quantities of foam in the milk without the need for intervention by the operator, who only has to position delivery member 3, fitted with temperature-sensitive component 6, into the container and await the end of the pressurised air/steam delivery cycle.

For example if it is desired to obtain a highly foamed milk at a temperature of 70°C, control unit 7 will start a program which will provide instructions to stop the flow of pressurised air at the same time as the flow of steam is stopped, in particular when temperature-sensitive component 6 detects that the desired temperature has been reached.

If instead it is desired to obtain a moderately foamed milk at a temperature of 80°C, then control unit 7 will stop the flow of pressurised air before the milk reaches the temperature of 80°C, while the delivery of steam alone will be continued until the desired temperature is reached. Furthermore if it is desired to obtain only hot milk without any foam it is enough to deliver steam only. As will be readily understood, these examples are only some examples of programs and instructions which can be provided by control unit 7.

Various technical solutions for achieving automatic function of the device described above are possible.

One possible configuration of device 1 is as follows. Pressurised air source 5 comprises a pump 8 driven by an electric motor 9. Source 5 is connected to a first delivery conduit 10.

A second delivery conduit 11 is connected to boiler 2; there is a stop valve 12 on second conduit 11.

Stop valve 12 may alternatively be located on delivery member 3 so as to act on the air/steam mixture and not on the steam only.

Delivery member 3 delivers a jet of steam and pressurised air through open extremity 4 originating from second conduit 11 and first conduit 10 respectively into the container.

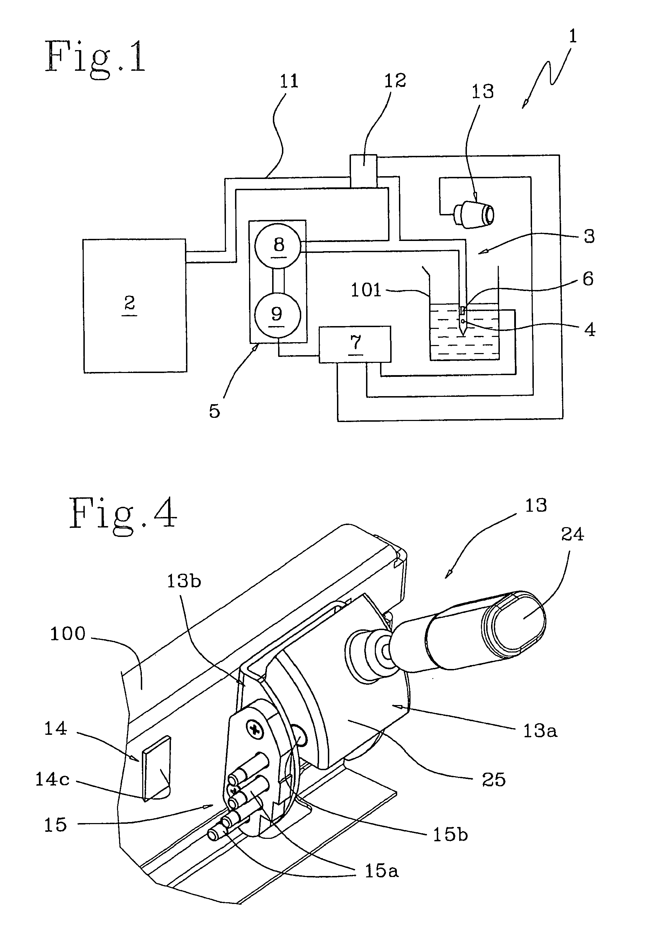

Extremity 4 may have a single opening (as shown diagrammatically in Figure 1) or several holes of suitable shape and size to allow the exit of pressurised air and steam.

First pressurised air conduit 10 and second steam conduit 11 are connected to delivery member 3, which in this way receives the air/steam mixture and delivers it to outlet extremity 4 which can be immersed in the milk which has to be foamed.

Control unit 7 is connected to steam stop valve 12, motor 9 for air pump 8 and also heat-sensitive component 6 connected to extremity 4 so that a variety of combinations of pressurised air and steam can be delivered according to the nature of the beverage that it is desired to prepare.

Advantageously device 1 comprises a selector 13 having a moving part 13a and a fixed part 13b connected to control unit 7. Moving part 13a can be switched between a plurality of operating positions, each of which corresponds to a program, preferably a single program, for control unit 7.

In the context of this invention, by a fixed part of the selector is meant any members or components, for example an anchor rod fitted with attachment and supporting appendages rigidly connected to machine 100, whereas by moving parts is meant a plurality of components and members which can move with respect to machine 100.

As mentioned above, each program corresponds to a series of instructions which control unit 7 imparts in order to bring about specific milk foaming and/or heating procedures.

Device 1 comprises an activation control 14 to activate the program selected by selector 13.

Device 1 also comprises sensor members 15 associated with selector and intended to determine the operating position adopted by selector 13. Sensor members 15 are intended to deliver a signal representative of the operating position adopted by selector 13 to control unit 7 so that control unit 7 selects one of the milk foaming or heating programs.

Sensor members 15 are located on a fixed part 13b of selector 13 and comprise a proximity sensor 15a associated with each operating position of selector 13.

Proximity sensors 15a are mounted in suitable housings provided in fixed part 13b of selector 13 and held in position by suitable devices (such as for example pins or pawls which are not illustrated in the appended figures). Proximity sensors 15a are intended to detect the presence of a reference element 15b of sensor members 15 located on moving part 13a of selector 13.

In the preferred embodiment of the invention, proximity sensors 15a are reed sensors and reference element 15b is a button generating a magnetic field, for example a magnet.

Thus, when the magnetic field generated by button affects the sensitive part of the reed sensor, the latter closes a contact generating and sending the signal representative of the operating position reached by the selector. It will be noted that when the magnetic field of the button is not sufficiently strong the contact of the reed sensor remains or switches to an open position. Sensors 15a are separated from each other in such a way that the magnetic field generated by button 15b can only be effective on a single sensor, that is it is able to close the contact of just one of the reed sensors, allowing just one program to be selected at a time.

It will be noted that, as mentioned above, proximity sensors 15a and reference element 15b make it possible to select only one program and not activate it. Activation is required from activation control 14.

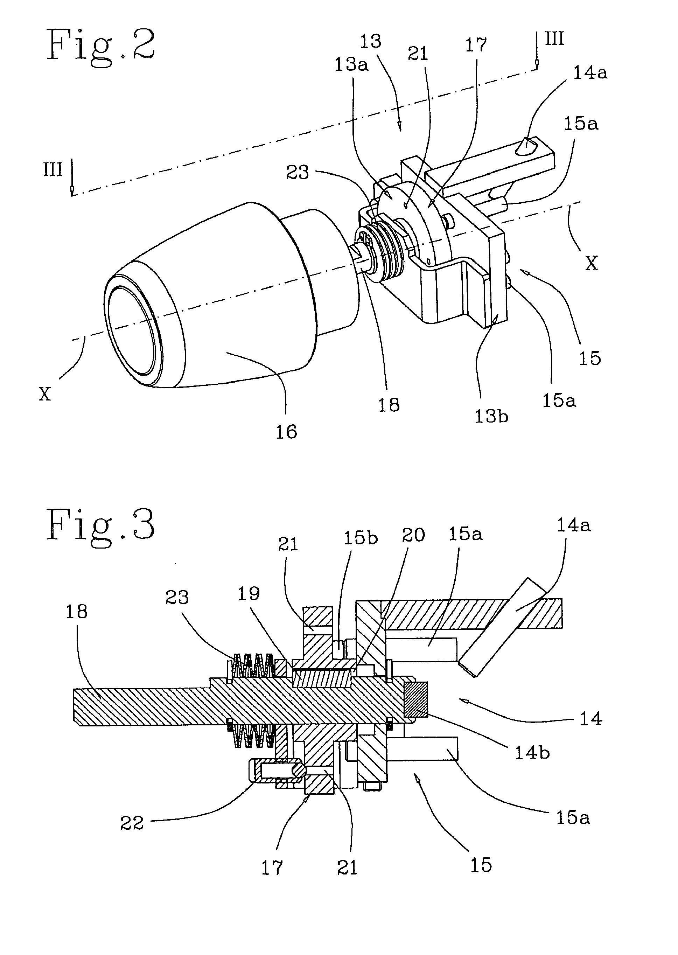

In a first embodiment of the invention, illustrated in Figures 2 and 3, moving part 13a of selector 13 comprises a rotating handle 16 driving a plate 17.

Handle 16 is a substantially cylindrical axially symmetrical body which can be grasped and operated by an operator.

Plate 17, moved by handle 16, rotates between the abovementioned operating positions.

In particular handle 16 is wedged on a shaft 18 at a first extremity of the latter. Shaft 18 can be rotated with respect to fixed part 13b of the selector and can also move along a direction X parallel to its longitudinal axis (for reasons which will be clarified below).

Plate 17 rotates in combination with shaft 18 and is located at a second extremity thereof opposite the first. It will be noted that plate 17 is not secured to shaft 18 in a direction parallel to the length of the shaft, in other words plate 17 does not move when the shaft moves in the X direction.

This effect is achieved through a pin 19 on shaft 18 housed in a through recess 20 in plate 17 extending in the X direction.

Thus when the shaft moves in the X direction pin 19 is free to move pin through recess 20 in plate 17, but when shaft 18 rotates pin 19 causes plate 17 to rotate by engaging the walls of through recess 20.

Magnetic button 15b is of one piece with plate 17 and is located on the same in the part opposite the part facing handle 16.

Rotation of plate 17 brings magnetic button 15b opposite reed sensors 15a located on fixed part 13b of selector 13.

Plate 17 also comprises a plurality of channels 21, the number of which is equal to the number of proximity sensors 15a.

Fixed part 13b of selector 13 is provided with a cursor 22 which alternately removably engages each of grooves 21.

When cursor 22 engages a groove 21 plate 17 remains in an angularly stable position, requiring the application of a greater torque on handle 16 than the torque required for normal rotation of the handle to disengage the cursor from the groove and move the plate from the stable angular position reached.

Button 15b, grooves 21 and cursor 22 are positioned on or with respect to plate 17 so as to ensure that each stable angular position of plate 17 corresponds to button 15b facing a sensor 15a.

Activation control 14 for the selected program is located on selector 13.

Activation control 14 comprises a proximity sensor 14a associated with the fixed part of selector 13 and intended to detect the presence of a reference element 14b located on the moving part of selector 13.

In particular reference element 14b of activation control 14 is located on shaft 18 at the second extremity thereof (the extremity opposite that on which handle 16 is engaged).

Activation control 14 also comprises a resilient member 23 acting between shaft 18 and fixed part 13b of selector 13.

This resilient member 23, which preferably comprises a plurality of disc springs in series, has the function of holding shaft 18 in a position at a distance from reference element 14b of proximity sensor 14a.

Yielding of resilient member 23 allows reference element 14b to approach proximity sensor 14a.

In other words resilient member 23 opposes lateral movement of shaft 18 in the X direction.

In the preferred embodiment of the invention, position sensor 14a is a reed sensor and reference element 14b is a magnetic button, similar to what has already been described in connection with sensor members 15.

Lateral movement of shaft 18 causes the magnetic button to approach the reed sensor in such a way as to close the latter's contact.

Activation of proximity sensor 14a causes a signal representative of activation of the selected program to be generated and delivered to control unit 7.

Receipt of this signal by control unit 7 causes the selected program to start.

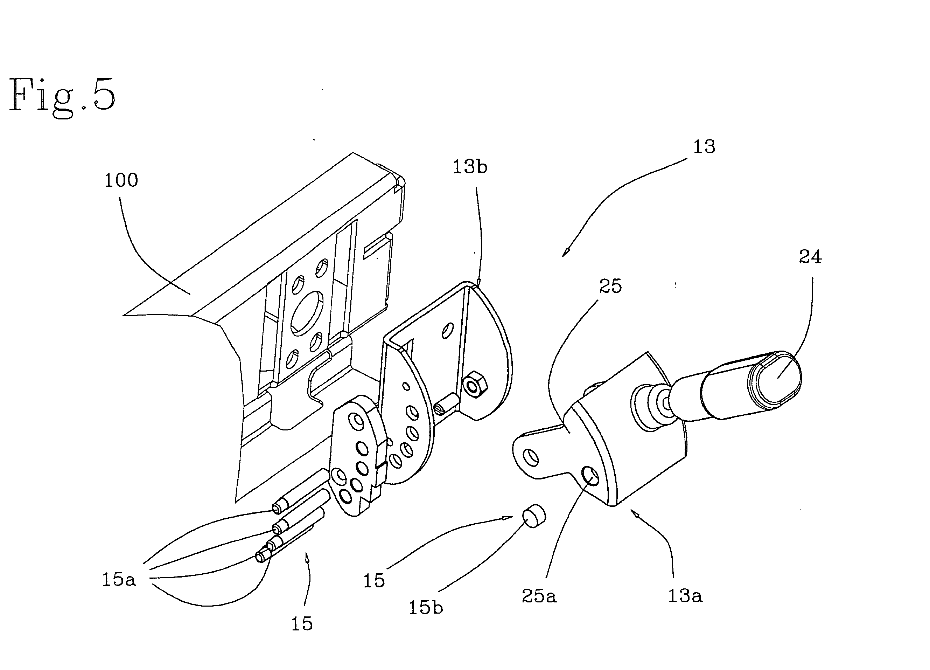

In a second embodiment of selector 13, illustrated in Figures 4 and 5, moving part 13b of selector 13 comprises a lever 24 activating a plate 25.

Lever 24 is a body of long shape which can be grasped and operated by an operator.

It will be noted that in both the first and the second embodiments selector 13 is not, neither is similar to, a switch or a pushbutton typical of automatic milk-foaming devices.

Plate 25 is integral with, and possibly of one piece with, lever 24 and when activated by lever 24 moves between the operating positions mentioned above.

Button 15b is magnetic and located on plate 25 to activate proximity sensors 15a on fixed part 13b of selector 13 during the movement of plate 25. Preferably, magnetic button 15b is inserted into a recess 25a in plate 25.

Plate 25 is hinged to fixed part 13b of the selector to rotate along an arc of circumference having an amplitude of between approximately 15° and approximately 180°, preferably approximately 90°.

Preferably the hinge axis of plate 25, that is to say the axis about which plate 25 rotates, is perpendicular to the longitudinal axis of lever 24 in such a way that all the force applied to lever 24 is used to rotate plate 25 (and does not produce forces aligned parallel to the axis of the hinge).

Button 15b also travels over a route following the arc of circumference mentioned above.

It will be noted that plate 25 moves between operating positions in an alternating motion, that is to say that the motion of plate 25 is bounded by mechanical end-of-travel stops.

In the first embodiment described and illustrated in Figures 2 and 3 the plate can move in a continuous rotary motion, that is to say it can perform a plurality of consecutive complete revolutions.

In the second embodiment of the selector illustrated in Figures 4 and 5 activation control 14 is a switch 14c which is distal with respect to selector 13, that is to say located in a position on machine 100 which is unaffected by selector 13.

Activation control 14 is in any event located in a zone which can be immediately reached by an operator operating selector 13 (as illustrated in Figure 4).

Switch 14c may be of any type, such as for example a mechanical, magnetic, optical or touch switch and the like.

The invention achieves the stated object.

In fact the selector, comprising a fixed part and a moving part, allows the operator to act manually on the automatic device to move the moving part of the selector when a specific operation has to be performed on the milk.

This movement, which is wholly similar to that performed on "conventional" devices, does not however bring about direct and immediate activation of the device as is instead the case in "conventional" devices but only allows the preselected program to be selected. Subsequent activation of the activation control causes the preselected program to start with the consequent sequence of operations being performed automatically by device 1.

The entire operation provides the consumer with the impression that the operator has used his own experience and ability to prepare the beverage.

## Claims

1. An automatic device for heating and foaming milk comprising:
a steam-generating boiler (2);
a delivery member (3), connected to said boiler (2) through which steam, pressurised air and/or a mixture thereof can pass, provided with an open extremity (4) which can be immersed in a container (101);
a temperature-sensitive component (6) designed for determining the temperature of the milk in the container (101);
a control unit (7) connected to the temperature-sensitive component (6) designed to activate a plurality of programs each of which provides operating instructions for the delivery of a mixture of air and steam from the delivery member (3);
**characterised in that** it comprises a selector (13),
having a moving part (13a) and a fixed part (13b),
connected to the control unit (7); said moving part (13a) being switchable between a plurality of operating positions each of which is associated with one of said programs, and **in that** it comprises an activation control (14) associated with the control unit (7) to activate the selected program.

2. A device according to claim 1, comprising sensor components (15) associated with the selector (13) and designed to determine the operating position adopted by the selector (13); said sensor components (15) being designed to send a signal representing the operating position adopted by the selector (13) to the control unit (7).

3. A device according to claim 2, in which the sensor components (15) are mounted on the fixed part (13b) of the selector (13) and comprise a proximity sensor (15a) associated with each operating position of the selector (13); said proximity sensors (15a) being designed to detect the presence of a reference element (15b) located on the moving part (13a) of the selector (13).

4. A device according to claim 3, in which the proximity sensors (15a) are reed sensors and the reference element (15b) is a button generating a magnetic field.

5. A device according to any one of the preceding claims, in which the moving part (13a) of the selector (13) comprises a rotating handle (16) activating a plate (17) to rotate the plate (17) between the operating positions.

6. A device according to claims 4 and 5, in which the button (15b) generating a magnetic field is located on the plate (17) in the part opposite the handle (16).

7. A device according to claim 1, in which the activation control (14) is located on the selector (13).

8. A device according to claim 7, in which the activation control (14) comprises a proximity sensor (14a) associated with the fixed part (13b) of the selector (13) and is designed to detect the presence of a reference element (14b) located on the moving part (13a) of that selector (13).

9. A device according to claims 5 and 8, in which the moving part (13a) of the selector (13) comprises a shaft (18) to which the handle (16) is keyed, the shaft (18) being rotatable about its own longitudinal axis (X) and being translatable along the same axis (X) with respect to the fixed part (13b) of the selector (13), the reference element (14b) of the activation control (14) being located on that shaft (18).

10. A device according to claim 9, comprising a resilient member (23) acting between the shaft (18) and the fixed part (13b) of the selector (13), the resilient member (23) holding the shaft (18) in a position in which the reference element (14b) of the activation control (14) is kept away from the corresponding proximity sensor (14a) and will yield to allow the reference element (14b) of the activation control (14) to approach the corresponding proximity sensor (14a).

11. A device according to any one of claims 1 to 4, in which the moving part (13a) of the selector (13) comprises a lever (24) activating a plate (25) to move the plate (25) between the operating positions.

12. A device according to claims 4 and 11, in which the button (15b) generating a magnetic field is located on the plate (25).

13. A device according to claim 12, in which the plate (25) is hinged to the fixed part (13b) of the selector (13) to rotate it along an arc of circumference having an amplitude of between 15° and 180°, preferably approximately 90°.

14. A device according to claim 11, in which the activation control (14) is a switch (14c) distal to the selector (13).

15. A device according to any one of the preceding claims, comprising a source (5) of pressurised air connected to the delivery member (3) to introduce pressurised air into the same and mix it with the steam.
